# EUROPEAN PATENT APPLICATION

(11) **EP 4 717 798 A2**
(43) Date of publication of application: **01.04.2026**
(21) Application number: 25205675.9
(22) Date of filing: 30.09.2025
(51) Int. Cl.: C25B 1/04, C25B 9/19, C25B 9/23, C25B 15/00, C25B 15/08

(54) **METHOD OF CLEANING IN-SITU A DIAPHRAGM AND/OR MEMBRANE IN AN ALKALINE ELECTROLYSIS SYSTEM**

(30) Priority: 30.09.2024 US 202463700847 P
(71) Applicant: Services Pétroliers Schlumberger, 75007 Paris (FR); Schlumberger Technology B.V., 2514 JG The Hague (NL)
(72) Inventor: CABELLO CARRAMOLINO, Gema, Cambridge, CB3 0EL (GB); HO, Man Yi, Cambridge, CB3 0EL (GB); ZHANG, Wenlin, Menlo Park, 94025 (US); LAVRUT, Eric, 92140 Clamart (FR); NELSON, Alan, Houston, 77056 (US)
(74) Representative: Schlumberger Intellectual Property Department

(57) **Abstract**

Provided herein are methods for cleaning a diaphragm and/or membrane in an electrolysis system. For example, provided herein is a method of chemically cleaning a diaphragm and/or membrane comprising immersing the diaphragm and/or membrane in an acidic medium, immersing the diaphragm and/or membrane in a weak alkaline medium, and rinsing the diaphragm and/or membrane with deionized water. Also provided herein is a method of electrochemically cleaning a diaphragm and/or membrane comprising reversing the direction of current applied across the diaphragm and/or membrane, applying a cathodic current to the electrolyte solution, applying an anodic current to the electrolyte solution, rinsing the diaphragm and/or membrane with deionized water, and removing deposits from the electrolyte solution. Also provided herein is a method of mechanically cleaning a diaphragm and/or membrane comprising applying a voltage across the diaphragm and/or membrane that is higher than the normal operating voltage, and mechanically agitating the electrolyte solution.

## Description

### CROSS-REFERENCE TO RELATED APPLICATIONS

The present application claims priority from U.S. Provisional Application No. 63/700847, filed September 30, 2024, entitled "System and Methods of Water Electrolysis," the entirety of which is incorporated herein by reference.

### BACKGROUND

Electrolysis of water is utilized for the production of hydrogen (H₂) to be used as an alternative energy source and green hydrogen for hard-to-abate heavy industries such as chemical and steel industries. Electrolysis of water requires water as a feed material and converts, using an electrochemical cell, water into H₂ and diatomic oxygen (O₂) via a redox reaction by applying an external electrical power to the cell. Electrolysis of water is generally implemented by an electrolyzer system that includes one or more stacks of electrochemical cells. Electrolyzer cells make use of an electrochemical reaction in a cell that comprises an anode, cathode, catalyst, gas distribution field and electrolyte.

Conventional electrolyzers, such as liquid alkaline electrolyzers, can suffer from degradation of the diaphragm and/or membrane that separates the first electrode (e.g., the cathode) from the second electrode (e.g., the anode). Diaphragm and/or membrane degradation is a major factor that limits the electrolyzer's lifetime. Diaphragm and/or membrane degradation can also limit the operating temperature of the electrolyzer over time, which results in reduced electrical efficiency.

Accordingly, improved systems and methods of water electrolysis are needed. In particular, there is a need in the industry for systems and methods of cleaning diaphragms and/or membranes in electrolyzer systems.

### SUMMARY

In one aspect, provided herein is a method of chemically cleaning a diaphragm and/or membrane in an alkaline electrolysis system, the method comprising: (a) immersing the diaphragm and/or membrane in an acidic medium; (b) immersing the diaphragm and/or membrane in a weak alkaline medium; and (c) rinsing the diaphragm and/or membrane with deionized water.

Also provided herein is a method of electrochemically cleaning a diaphragm and/or membrane in an alkaline electrolysis system comprising an electrolyte solution, the method comprising: (a) reversing the direction of current applied across the diaphragm and/or membrane; (b) applying a cathodic current to the electrolyte solution; (c) applying an anodic current to the electrolyte solution; (d) rinsing the diaphragm and/or membrane with deionized water; and (e) removing deposits from the electrolyte solution.

Also provided herein is a method of mechanically cleaning a diaphragm and/or membrane in an alkaline electrolysis system, the method comprising: (a) applying a voltage across the diaphragm and/or membrane that is higher than the normal operating voltage, thereby generating a stronger flow of gas bubbles within the electrolyte solution; and (b) mechanically agitating the electrolyte solution.

Also provided herein is a method of cleaning a diaphragm and/or membrane in an alkaline electrolysis system, the method comprising: (a) chemically cleaning the diaphragm and/or membrane; (b) electrochemically cleaning the diaphragm and/or membrane; and (c) mechanically cleaning the diaphragm and/or membrane.

The following description and the appended figures set forth certain features for purposes of illustration.

### BRIEF DESCRIPTION OF DRAWINGS

So that the manner where the above recited features may be understood in detail, a more particular description, briefly summarized above, may be had by reference to example aspects, some of which are illustrated in the appended drawings.
FIG. 1 is a schematic view of an electrolyzer cell, according to embodiments of the present disclosure.
FIG. 2 is a flow diagram of a method for cleaning a diaphragm and/or membrane in an electrolyzer system, according to embodiments of the present disclosure.
FIG. 3 is a flow diagram of a method for cleaning a diaphragm and/or membrane in an electrolyzer system, according to embodiments of the present disclosure.
FIG. 4 is a flow diagram of a method for cleaning a diaphragm and/or membrane in an electrolyzer system, according to embodiments of the present disclosure.
FIG. 5 is a flow diagram of a method for cleaning a diaphragm and/or membrane in an electrolyzer system, according to embodiments of the present disclosure.

### DETAILED DESCRIPTION

One or more specific embodiments of the present disclosure will be described herein. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The present disclosure generally relates to systems and methods of water electrolysis. The systems may include a first electrode set. The first electrode set includes a first bipolar plate electrically coupled to a power source. A first electrode is disposed adjacent to the first bipolar plate and in electrical contact with the first bipolar plate. The systems include a diaphragm. The first electrode is disposed adjacent to a first side of the diaphragm. The systems include a second electrode set. The second electrode set includes a second bipolar plate and a second electrode. The second electrode is disposed adjacent to a second side of the diaphragm. The second side is opposite the first side.

The present disclosure also generally relates to systems and methods of water electrolysis. The methods include generating a current between a first electrode set and a second electrode set separated by a diaphragm, and circulating water within one of the first electrode set or the second electrode set. The first electrode set includes a first bipolar plate electrically coupled to a power source, and a first electrode disposed adjacent to the first bipolar plate and to a first side of the diaphragm and in electrical contact with the first bipolar plate. The second electrode set includes a second bipolar plate and a second electrode. The second electrode is disposed adjacent to a second side of the diaphragm. The second side is opposite the first side, and in electrical contact with the second bipolar plate. The current, in the presence of water, produces an electrolysis reaction.

Also provided herein are systems and methods for cleaning a diaphragm and/or membrane in an electrolyzer system, as described in further detail below. In an electroyzer system, a diaphragm typically comprises a porous material (e.g., a porous ceramic) that physically prevents most molecules from passing through. Ions, however, are able to pass through the holes in the porous structure of the diaphragm. Membranes, in contrast, typically comprise polymers and selectively allow transport of ions across the membrane using ion hopping or other transport mechanisms. The systems and methods provided herein can be applied equally to diaphragms and to membranes, and those terms may be used interchangeably throughout the remainder of the description.

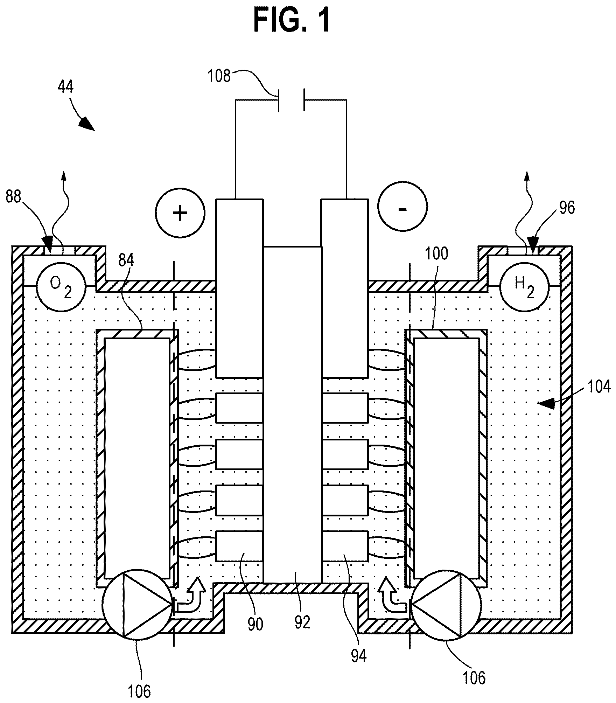

Turning now to the figures, FIG. 1 shows a detailed view of an electrolyzer cell 44. In this view only one electrolyzer cell is shown, however, two or more electrolyzer cells may be coupled in series in order to produce more hydrogen. The electrolyzer cell 44 includes a first bipolar plate 84 that is adjacent to a first channel 88 and a first electrode 90. The first channel 88 may be a channel suitable to recover one or more reaction products of an electrolysis reaction, e.g., H₂ and/or O₂. For example, the first channel 88 may be suitable to recover a reaction product of O₂. A positive charge may be supplied to the first bipolar plate 84 via a power source 108. The first bipolar plate 84 is electrically coupled to the first electrode 90. The first electrode 90 can include a conductive material, *e.g.,* a nickel mesh. The first electrode 90 is a mesh material, thereby allowing for electrolysis reaction products, e.g., gaseous bubbles such as O₂, to form.

Adjacent to the first electrode 90 is a diaphragm 92. The diaphragm 92 can be nonconductive to electrons. The diaphragm 92 can include a composite material, e.g., Zirconia and polysulfone. Without being bound by theory, the diaphragm 92 can allow OH⁻ ions to pass through the diaphragm 92, while restricting H₂ and O₂ gases from passing through.

Adjacent to the diaphragm 92 is a second electrode 94 and a second channel 96. The second channel 96 may be a channel suitable to recover one or more reaction products of an electrolysis reaction, e.g., H₂. For example, the second channel 96 may be suitable to recover a reaction product of H₂. The second electrode 94 can include a conductive material, e.g., a nickel mesh. The second electrode 94 is a mesh material, thereby allowing for electrolysis reaction products, e.g., gaseous bubbles such as H₂, to form. Adjacent to the second electrode 94 is a second bipolar plate 100. A negative charge may be supplied to the second bipolar plate 100 via the power source 108. The second bipolar plate 100 is electrically coupled to the second electrode 94.

The electrolyzer cell 44 is immersed in an electrolyte solution 104. The electrolyte solution 104 includes an alkaline solution, *e.g.,* a solution having a pH greater than 7, *e.g.,* greater than 7.5, greater than 8, greater than 9, greater than 10, or greater than 11. The alkaline solution can include an aqueous solution having an electrolyte, *e.g.,* a hydroxide electrolyte. For example, the electrolyte solution can include a mixture of water and potassium hydroxide. The electrolyzer cell 44 receives water and/or electrolyte solution 104 from a pump 106. The pump 106 can include any pump suitable to circulate an aqueous fluid, e.g., water and/or the electrolyte solution 104.

In operation, the electrolyzer cell 44 may receive a positive charge at the first bipolar plate 84 and a negative charge at the second bipolar plate 100, thereby creating a voltage difference across the first electrode 90 and the second electrode 94, which is separated by the diaphragm 92. Due to the voltage difference and the supply of aqueous water from the pump 106, water may be reduced on the second electrode 94 to form H₂. The H₂ may then diffuse and be directed out of the second channel 96, *e.g.,* via convectional flow. The OH⁻ may transfer through the diaphragm and be oxidized on the first electrode 90 to produce H₂O and O₂. The O₂ may diffuse and be directed out the first channel 88, *e.g.,* via convectional flow, in which the H₂O may recirculate throughout the electrolyzer cell 44 to be further reacted.

Without being bound to a particular theory, a diaphragm and/or membrane within an alkaline electrolyzer system (e.g., diaphragm 92) can become degraded due to mechanical, thermal, and/or chemical causes. For example, chemical impurities may be present in the water used to produce electrolyte solution 104. Chemical impurities may also be introduced into the system via corrosion and dissolution of the electrodes, catalysts, and other components of the electrolysis system.

The electrolysis system may comprise one or more chemical impurities selected from the group consisting of cationic, anionic, and organic impurities.

Cationic impurities include, for example, metal cations. Non-limiting examples of metal ions that may be present in the electrolysis system include Fe³⁺, Ni²⁺, Zn²⁺, Cd²⁺, Pb²⁺, Ca²⁺, and Mg²⁺. For example, and without being bound to a particular theory, Fe³⁺ and Ni²⁺ can be adsorbed on a catalyst (if present), as optimal amounts of these cations can enhance both the oxygen evolution reaction (OER) and the hydrogen evolution reaction (HER); however, Fe³⁺ and Ni²⁺ cations can also become adsorbed upon the diaphragm and/or membrane and degrade its performance. In contrast, Zn²⁺, Cd²⁺, and Pb²⁺ anions will inhibit the OER and the HER, while also degrading the performance of the diaphragm and/or membrane. Ca²⁺ and Mg²⁺ cations can form deposits at high pH, may block reactant access to catalyst sites, and can also degrade the performance of the diaphragm and/or membrane.

Anionic impurities include, for example, carbon dioxide species (e.g., CO₂, CO₃²⁻) and carbonate species (e.g., HCO₃⁻, CO₃²⁻). For example, CO₂ poisoning can change the physical structure of the membrane and reduce its ionic conductivity. Without being bound to a particular theory, CO₂ can come from the leakage, sealing and oxidation of organic impurities in the electrolyte, as the applied anodic potential in an alkaline electrolyzer system is much higher than the oxidation potential of the organic species in these components. Additionally, CO₂ can react with KOH to form bicarbonate (HCO₃⁻) and carbonate (CO₃²⁻). These species can replace the intended charge carrier OH⁻ within the membrane and reduce the ionic conductivity, as the conductivity decreases according to the following order: OH⁻ > HCO₃⁻ > CO₃²⁻. Furthermore, the highly alkaline pH present within the alkaline electrolyser (e.g., the pH of electrolyte solution 104) can cause precipitation of metallic ions due to the low solubility of their oxides and carbonates. Therefore, metallic carbonates and hydroxides (e.g. Mg(OH)₂) and other organic impurities can clog the membrane pores, reducing both the mass transport and ionic conductivity within the membrane.

Organic impurities include, for example, aromatic organic alcohols (e.g,, phenol, benzyl alcohol), aromatic organic acids (e.g., benzoic acid, salicylic acid, phthalic acid), aliphatic organic alcohols (e.g,. methanol, ethanol, isopropanol), aliphatic organic acids (e.g., formic acid, propionic acid), and organic compounds comprising one or more nitrile (-C≡N) functional groups (e.g., acetonitrile, benzonitrile, acrylonitrile).

In an effort to address these issues, provided herein are systems and methods of cleaning diaphragms and/or membranes in electrolyzer systems. For example, provided herein are (1) a mild chemical cleaning process, (2) an electrochemical cleaning process, and (3) a mechanical cleaning process for a diaphragm and/or membrane, each of which is described in further detail below. Any of these processes may be used individually, or one or more processes may be used in any order or combination to clean a diaphragm and/or membrane.

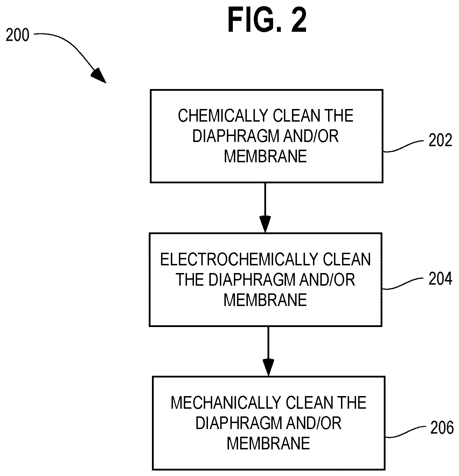

FIG. 2 shows a flow diagram of a cleaning process 200. The process includes, at operation 202, chemically cleaning the diaphragm and/or membrane. At operation 204, the process comprises electrochemically cleaning the diaphragm and/or membrane. And at operation 206, the process comprises mechanically cleaning the diaphragm and/or membrane.

### Mild Chemical Cleaning

Provided herein is a mild chemical cleaning process that can be used to clean a diaphragm and/or membrane *in situ.* The mild chemical cleaning process may comprise one or more of the following steps, each of which may be repeated if desired: (a) immersing the diaphragm and/or membrane in an acidic medium; (b) immersing the diaphragm and/or membrane in a weak alkaline medium; and (c) rinsing the diaphragm and/or membrane with deionized water.

The mild chemical cleaning process may comprise immersing the diaphragm and/or membrane in an acidic medium. Immersing the diaphragm and/or membrane into an acidic medium gently removes carbonates, metal ion deposits, and other ionic species that are present in or on the diaphragm and/or membrane.

The acidic medium comprises at least one acid. Non-limiting examples of suitable acids include sulfuric acid, citric acid, acetic acid, and mixtures thereof.

The acidic medium is preferably an aqueous solution comprising an acid in a concentration of from about 0.01% by weight to about 5% by weight. For example, the acidic medium may comprise an acid in a concentration of at least about 0.01% by weight, at least about 0.05% by weight, at least about 0.1% by weight, or at least about 0.5% by weight. Conversely, the acidic medium may comprise an acid in a concentration of, for example, no greater than about 5% by weight, no greater than about 2% by weight, no greater than about 1% by weight, or no greater than about 0.5% by weight. The acidic medium may comprise an acid in a concentration that falls within a range bounded by any minimum value and any maximum value listed above. As non-limiting examples, the acidic medium may comprise an acid in a concentration of from about 0.5% to about 2% by weight, or from about 0.1% by weight to about 0.5% by weight.

The mild chemical cleaning process may comprise immersing the diaphragm and/or membrane in two or more acidic media, each comprising a different acid. For example, the mild chemical cleaning process may comprise immersing the diaphragm into a first acidic medium comprising sulfuric acid (e.g., an acidic medium comprising sulfuric acid in a concentration of from about 0.5% to about 2% by weight). The mild chemical cleaning process may then comprise immersing the diaphragm into a second acidic medium comprising citric acid (e.g., an acidic medium comprising citric acid in a concentration of from about 0.1% to about 0.5% by weight).

The mild chemical cleaning process may comprise immersing the diaphragm and/or membrane into a weak alkaline medium. Immersing the diaphragm and/or membrane into a weak alkaline medium gently removes organic species that are present in or on the diaphragm and/or membrane.

The weak alkaline medium comprises at least one base. Non-limiting examples of suitable bases include sodium bicarbonate, potassium bicarbonate, sodium borate, potassium borate, and mixtures thereof.

The weak alkaline medium is preferably an aqueous solution comprising a base in a concentration of from about 0.01% by weight to about 5% by weight. For example, the weak alkaline medium may comprise a base in a concentration of at least about 0.01% by weight, at least about 0.05% by weight, at least about 0.1% by weight, or at least about 0.5% by weight. Conversely, the weak alkaline medium may comprise a base in a concentration of, for example, no greater than about 5% by weight, no greater than about 2% by weight, no greater than about 1% by weight, or no greater than about 0.5% by weight. The weak alkaline medium may comprise a base in a concentration that falls within a range bounded by any minimum value and any maximum value listed above. As non-limiting examples, the weak alkaline medium may comprise a base in a concentration of from about 0.5% to about 2% by weight, or from about 0.1% by weight to about 0.5% by weight.

As a particular example, the mild chemical cleaning process may comprise immersing the diaphragm and/or membrane into a weak alkaline medium comprising sodium bicarbonate in a concentration of from about 0.1% to about 0.5% by weight.

The mild chemical cleaning process may comprise rinsing the diaphragm and/or membrane with deionized water. For example, the mild chemical cleaning process may comprise spraying and/or pouring water over the surface of the diaphragm and/or membrane. The mild chemical cleaning process may also comprise immersing the diaphragm and/or membrane in deionized water. For example, the mild chemical cleaning process may comprise immersing the diaphragm and/or membrane in deionized water for a period of at least about 5 minutes, at least about 10 minutes, at least about 15 minutes, at least about 30 minutes, at least about 45 minutes, or at least about 1 hour.

The mild chemical cleaning process may comprise rinsing the diaphragm and/or membrane with deionized water multiple times. For example, the process may comprise a first rinsing step after immersing the diaphragm and/or membrane into an acidic medium, and second rinsing step after immersing the diaphragm and/or membrane into a weak alkaline medium.

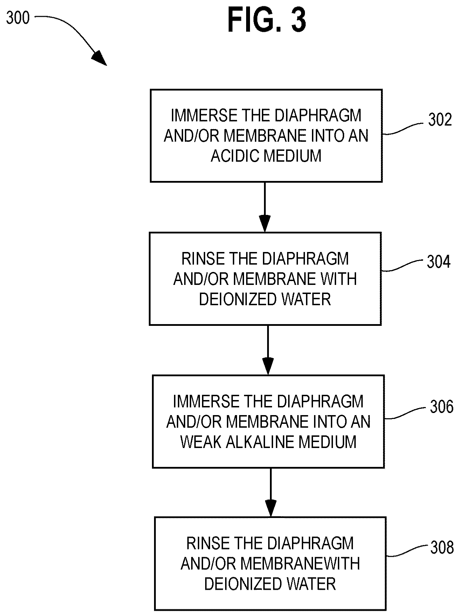

FIG. 3 shows a flow diagram of a mild chemical cleaning process 300. The process includes, at operation 302, immersing the diaphragm and/or membrane into an acidic medium. At operation 304, the process comprises rinsing the diaphragm and/or membrane with deionized water. At operation 306, the process comprises immersing the diaphragm and/or membrane into a weak alkaline medium. And at operation 308, the process comprises rinsing the diaphragm and/or membrane with deionized water.

In each of the steps described above, the acidic medium, deionized water, or weak alkaline medium may be introduced into the electrolyte system during a scheduled maintenance window, or as otherwise required to address buildup of impurities in the diaphragm and/or membrane. The mild chemical cleaning process can therefore be used for *in situ* cleaning of the diaphragm and/or membrane, without removing it from the electrolyzer system. Alternatively, if desired the diaphragm and/or membrane can be removed from the electrolyzer system and cleaned *ex situ,* which may allow for the use of a stronger acid.

### Electrochemical Cleaning

Provided herein is an electrochemical cleaning process that can be used to clean a diaphragm and/or membrane *in situ.* The electrochemical cleaning process may comprise one or more of the following steps, each of which may be repeated if desired: (a) reversing the direction of current applied across the diaphragm and/or membrane; (b) applying a cathodic current; (c) applying an anodic current; (d) rinsing the diaphragm and/or membrane with deionized water; and (e) removing deposits from the electrolyte solution.

The electrochemical cleaning process may comprise reversing the direction of current applied across the diaphragm and/or membrane. Without being bound to a particular theory, reversing the direction of current will reverse the corresponding direction of ion flow, and thereby dislodge deposits that have accumulated in or on the diaphragm and/or membrane.

Preferably, the current is reversed by applying a relatively low voltage across the membrane in order to avoid oxidation of the cathode. For example, if the cathode comprises nickel, it is desirable to avoid oxidation of the Ni to Ni(OH)₂ or NiO. Accordingly, the voltage applied across the membrane is less than about 0.6V_{RHE}, less than about 0.55V_{RHE}, or less than about 0.5V_{RHE}. Alternatively, if a higher voltage is required to thoroughly clean the diaphragm and/or membrane, the oxidized cathode should be electrochemically reduced (e.g., back to Ni) before it is used in the electrolyzer system.

The current is preferably reversed for a period of time sufficient to dislodge deposits accumulated in or on the diaphragm and/or membrane and restore the desired level conductivity across the diaphragm and/or membrane. For example, the current may be reversed for a period of at least about 1 minute, at least about 2 minutes, at least about 5 minutes, at least about 10 minutes, or at least about 15 minutes or more.

The electrochemical cleaning process may comprise applying a cathodic current to the electrolyte solution in which the diaphragm and/or membrane is immersed. The applied current may be constant or pulsed. Without being bound to a particular theory, applying a cathodic current will reduce deposits that have accumulated in or on the diaphragm and/or membrane. Deposits removed from the diaphragm and/or membrane will subsequently dissolve in the electrolyte solution.

The electrochemical cleaning process may comprise applying an anodic current to the electrolyte solution in which the diaphragm and/or membrane is immersed. The applied current may be constant or pulsed. Without being bound to a particular theory, applying an anodic current will remove metal deposits that have accumulated in or on the diaphragm and/or membrane.

The electrochemical cleaning process may comprise rinsing the diaphragm and/or membrane with deionized water. For example, the electrochemical cleaning process may comprise spraying and/or pouring water over the surface of the diaphragm and/or membrane. The electrochemical cleaning process may also comprise immersing the diaphragm and/or membrane in deionized water. For example, the electrochemical cleaning process may comprise immersing the diaphragm and/or membrane in deionized water for a period of at least about 5 minutes, at least about 10 minutes, at least about 15 minutes, at least about 30 minutes, at least about 45 minutes, or at least about 1 hour.

The electrochemical cleaning process may comprise removing deposits (e.g., metal deposits) from the electrolyte solution. The deposits may be removed, for example, by passing the electrolyte solution through a filter, an ion exchange resin, or a combination thereof.

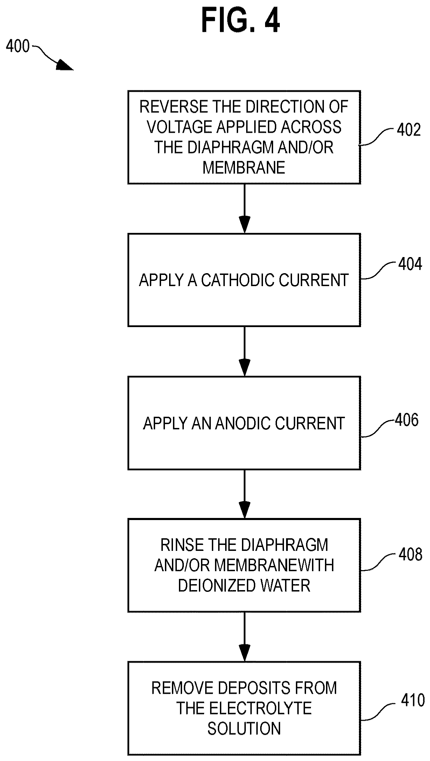

FIG. 4 shows a flow diagram of an electrochemical cleaning process 400. The process includes, at operation 402, reversing the direction of voltage applied across the diaphragm and/or membrane. At operation 404, the process comprises applying a cathodic current to the electrolyte solution. At operation 406, the process comprises applying an anodic current to the electrolyte solution. At operation 408, the process comprises rinsing the diaphragm and/or membrane with deionized water. And at operation 410, the process comprises removing deposits from the electrolyte solution.

Each of the steps described above may be conducted during a scheduled maintenance window for the electrolyte system, or as otherwise required to address buildup of impurities in the diaphragm and/or membrane. The electrochemical cleaning process can be used for *in situ* cleaning of the diaphragm and/or membrane, without removing it from the electrolyzer system. Alternatively, if desired the diaphragm and/or membrane can be removed from the electrolyzer system and cleaned *ex situ,* which may allow for the use of stronger voltages and currents applied across the diaphragm and/or membrane than would be feasible during *in situ* cleaning.

### Mechanical Cleaning

Provided herein is a mechanical cleaning process that can be used to clean a diaphragm and/or membrane *in situ.* The mechanical cleaning process may comprise one or more of the following steps, each of which may be repeated if desired: (a) applying a voltage across the diaphragm and/or membrane that is higher than the normal operating voltage, thereby generating a stronger flow of gas bubbles within the electrolyte solution; and (b) mechanically agitating the electrolyte solution.

The mechanical cleaning process may comprise applying a voltage across the diaphragm and/or membrane that is higher than the normal operating voltage, thereby generating a stronger flow of gas bubbles within the electrolyte solution. Without being bound to a particular theory, gas bubbles can clean and dislodge foulants (e.g., metal carbonates and/or organic impurities) present on the surfaces of the diaphragm and/or membrane.

For example, the mechanical cleaning process may comprise applying a voltage across the diaphragm and/or membrane that is at least about 1.05, at least about 1.1, at least about 1.15, or at least about 1.2 times the normal operating voltage. Conversely, the voltage applied across the diaphragm and/or membrane is typically no greater than about 2, no greater than about 1.5, no greater than about 1.4, no greater than about 1.3, or no greater than about 1.2 times the normal operating voltage. The voltage applied across the diaphragm and/or membrane may fall within a range bounded by any minimum value and any maximum value listed above. As a non-limiting example, the voltage applied across the diaphragm and/or membrane may be from about 1.05 to about 1.2 times the normal operating voltage.

The mechanical cleaning process may comprise mechanically agitating the electrolyte solution. For example, the electrolyte solution may be agitated by sonication. The sonication may, for example, provide a power output of at least about 20 Watts/L, at least about 30 Watts/L, at least about 40 Watts/L, or at least about 50 Watts/L of electrolyte. Conversely, the sonication typically provides a power output of at most about 150 Watts/L, at most about 125 Watts/L, at most about 100 Watts/L, or at most about 90 Watts/L of electrolyte. The power output may fall within a range bounded by any two values listed above. For example, the sonication may provide a power output of from about 40 Watts/L of electrolyte to about 90 Watts/L of electrolyte.

The sonication may comprise agitating the electrolyte at a frequency of at least about 10 kHz, at least about 15 kHz, at least about 20 kHz, or at least about 50 kHz. Conversely, the sonication typically comprises agitating the electrolyte at a frequency of at most about 60 kHz, at most about 50 kHz, or at most about 40 kHz. For example, the sonication may comprise agitating the electrolyte at a frequency of from about 20 kHz to about 50 kHz.

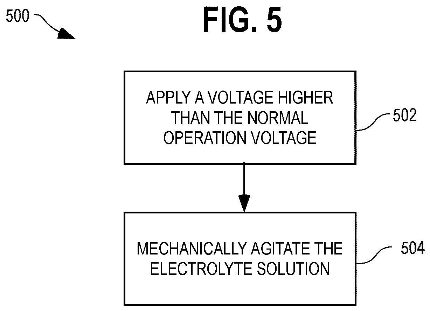

FIG. 5 shows a flow diagram of an electrochemical cleaning process 500. The process includes, at operation 502, applying a voltage across the diaphragm and/or membrane that is higher than the normal operating voltage. At operation 504, the process comprises mechanically agitating the electrolyte solution.

The phrases, unless otherwise specified, "consists essentially of' and "consisting essentially of' do not exclude the presence of other steps, elements, or materials, whether or not, specifically mentioned in this specification, so long as such steps, elements, or materials, do not affect the basic and novel characteristics of the present disclosure, additionally, they do not exclude impurities and variances normally associated with the elements and materials used.

Numerical ranges used herein include the numbers recited in the range. For example, the numerical range "from 1 wt % to 10 wt %" includes 1 wt % and 10 wt % within the recited range.

For the sake of brevity, only some ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

All numerical values within the detailed description herein are modified by "about" the indicated value, and take into account experimental error and variations that would be expected by a person having ordinary skill in the art.

All documents described herein are incorporated by reference herein, including any priority documents and or testing procedures to the extent they are not inconsistent with this text. As is apparent from the foregoing general description and the specific embodiments, while forms of the present disclosure have been illustrated and described, various modifications can be made without departing from the spirit and scope of the present disclosure. Accordingly, it is not intended that the present disclosure be limited thereby. Likewise, the term "comprising" is considered synonymous with the term "including" for purposes of United States law. Likewise whenever a composition, an element or a group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

The specific embodiments described herein have been illustrated by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for (perform)ing (a function)..." or "step for (perform)ing (a function)...", it is intended that such elements are to be interpreted under 35 U.S.C. 112(f). However, for any claims containing elements designated in any other manner, it is intended that such elements are not to be interpreted under 35 U.S.C. 112(f).

### Embodiments

Implementation examples are described in the following numbered clauses:
E1. A method of chemically cleaning a diaphragm and/or membrane in an alkaline electrolysis system, the method comprising: (a) immersing the diaphragm and/or membrane in an acidic medium; (b) immersing the diaphragm and/or membrane in a weak alkaline medium; and (c) rinsing the diaphragm and/or membrane with deionized water.
E2. The method of embodiment E1 wherein the acidic medium comprises at least one acid selected from the group consisting of sulfuric acid, citric acid, acetic acid, and mixtures thereof.
E3. The method of embodiment E1 or E2 wherein the acidic medium comprises the at least one acid in a concentration of from about 0.01% by weight to about 5% by weight.
E4. The method of embodiment E1 comprising immersing the diaphragm and/or membrane in a first acidic medium comprising a first acid, and subsequently immersing the diaphragm and/or membrane in a second acidic medium comprising a second acid.
E5. The method of embodiment E4 wherein the first acidic medium comprises sulfuric acid.
E6. The method of embodiment E5 wherein the first acidic medium comprises sulfuric acid in a concentration of from about 0.5% to about 2% by weight.
E7. The method of embodiment E4 wherein the first acidic medium comprises citric acid.
E8. The method of embodiment E7 wherein the first acidic medium comprises citric acid in a concentration of from about 0.1% to about 0.5% by weight.
E9. The method of any one of embodiments E1 to E8 wherein the weak alkaline medium comprises at least one base selected from the group consisting of sodium bicarbonate, potassium bicarbonate, sodium borate, potassium borate, and mixtures thereof.
E10. The method of embodiment E9 wherein the weak alkaline medium comprises sodium bicarbonate in a concentration of from about 0.1% to about 0.5% by weight.
E11. The method of any one of embodiments E1 to E10 wherein the diaphragm and/or membrane is rinsed by immersing the diaphragm and/or membrane in deionized water for a period of at least about 5 minutes.
E12. A method of electrochemically cleaning a diaphragm and/or membrane in an alkaline electrolysis system comprising an electrolyte solution, the method comprising: (a) reversing the direction of current applied across the diaphragm and/or membrane; (b) applying a cathodic current to the electrolyte solution; (c) applying an anodic current to the electrolyte solution; (d) rinsing the diaphragm and/or membrane with deionized water; and (e) removing deposits from the electrolyte solution.
E13. The method of embodiment E12 wherein the direction of current is reversed by applying a voltage across the membrane, wherein said voltage is less than about 0.6VRHE.
E14. The method of embodiment E12 or E13 wherein the applied cathodic current is constant.
E15. The method of embodiment E12 or E13 wherein the applied cathodic current is pulsed.
E16. The method of any one of embodiments E12 to E15 wherein the applied anodic current is constant.
E17. The method of any one of embodiments E12 to E15 wherein the applied anodic current is pulsed.
E18. The method of any one of embodiments E12 to E17 wherein the diaphragm and/or membrane is rinsed by immersing the diaphragm and/or membrane in deionized water for a period of at least about 5 minutes.
E19. The method of any one of embodiments E12 to E18 wherein the electrolyte solution is passed through a filter, an ion exchange resin, or a combination thereof.
E20. A method of mechanically cleaning a diaphragm and/or membrane in an alkaline electrolysis system, the method comprising: (a) applying a voltage across the diaphragm and/or membrane that is higher than the normal operating voltage, thereby generating a stronger flow of gas bubbles within the electrolyte solution; and (b) mechanically agitating the electrolyte solution.
E21. The method of embodiment E20 wherein the voltage applied across the diaphragm and/or membrane is from about 1.05 to about 1.2 times the normal operating voltage.
E22. The method of embodiment E20 or E21 wherein the electrolyte solution is agitated by sonication.
E23. A method of cleaning a diaphragm and/or membrane in an alkaline electrolysis system, the method comprising: (a) chemically cleaning the diaphragm and/or membrane by the method set forth in any one of embodiments E1 to E11; (b) chemically cleaning the diaphragm and/or membrane by the method set forth in any one of embodiments E12 to E19; and (c) mechanically cleaning the diaphragm and/or membrane by the method set forth in any one of embodiments E20 to E22.
E24. The method of any one of embodiments E1 to E23 wherein the diaphragm and/or membrane is cleaned *in situ* within the electrolyzer system.

While the present disclosure has been described with respect to a number of embodiments and examples, those skilled in the art, having the benefit of this disclosure, will appreciate that other embodiments can be devised which do not depart from the scope and spirit of the present disclosure.

## Claims

1. A method (300) of chemically cleaning a diaphragm and/or membrane (92) in an alkaline electrolysis system (44), the method (300) comprising:
(a) immersing (302) the diaphragm and/or membrane (92) in an acidic medium;
(b) immersing (306) the diaphragm and/or membrane (92) in a weak alkaline medium; and
(c) rinsing (308) the diaphragm and/or membrane (92) with deionized water.

2. The method (300) of claim 1, wherein the acidic medium comprises at least one acid selected from the group consisting of sulfuric acid, citric acid, acetic acid, and mixtures thereof.

3. The method (300) of claim 2, wherein the acidic medium comprises the at least one acid in a concentration of from about 0.01% by weight to about 5% by weight.

4. The method (300) of any of claims 1 to 3, wherein immersing (302) the diaphragm and/or membrane (92) in an acidic medium further comprises first immersing the diaphragm and/or membrane (92) in a first acidic medium comprising a first acid, and subsequently immersing the diaphragm and/or membrane (92) in a second acidic medium comprising a second acid.

5. The method (300) of claim 4, wherein the first acidic medium comprises sulfuric acid in a concentration of from about 0.5% by weight to about 2% by weight.

6. The method (300) of claim 4, wherein the first acidic medium comprises citric acid in a concentration of from about 0.1% by weight to about 0.5% by weight.

7. The method (300) of any of claims 1 to 6, wherein the weak alkaline medium comprises at least one base selected from the group consisting of sodium bicarbonate, potassium bicarbonate, sodium borate, potassium borate, and mixtures thereof.

8. The method (300) of any of claims 1 to 7, wherein the weak alkaline medium comprises sodium bicarbonate in a concentration of from about 0.1% by weight to about 0.5% by weight.

9. The method (300) of any of claims 1 to 8, wherein rinsing (308) the diaphragm and/or membrane (92) further comprises immersing the diaphragm and/or membrane in deionized water for a period of at least about 5 minutes.

10. A method (400) of electrochemically cleaning a diaphragm and/or membrane (92) in an alkaline electrolysis system (44) comprising an electrolyte solution (104), the method (400) comprising:
(a) reversing (402) a direction of current applied across the diaphragm and/or membrane (92);
(b) applying (404) a cathodic current to the electrolyte solution (104);
(c) applying (406) an anodic current to the electrolyte solution (104);
(d) rinsing (408) the diaphragm and/or membrane (92) with deionized water; and
(e) removing (410) deposits from the electrolyte solution (104).

11. The method (400) of claim 10, wherein reversing (402) a direction of current applied across the diaphragm and/or membrane (92) further comprises applying a voltage across the diaphragm and/or membrane (92), wherein said voltage is less than about 0.6V_{RHE}.

12. The method (400) of claim 10 or claim 11, wherein at least one of the applied cathodic current and the applied anodic current is constant.

13. The method (400) of claim 10 or claim 11, wherein at least one of the applied cathodic current and the applied anodic current is pulsed.

14. The method (400) of any of claims 10-13, wherein rinsing (408) the diaphragm and/or membrane (92) further comprises immersing the diaphragm and/or membrane (92) in deionized water for a period of at least about 5 minutes.

15. The method (400) of any of claims 10-14, further comprising passing the electrolyte solution (104) through a filter, an ion exchange resin, or a combination thereof.
